# EUROPÄISCHE PATENTSCHRIFT

(11) **EP 2 257 184 B1**
(45) Veröffentlichungstag und Bekanntmachung des Hinweises auf die Patenterteilung: **08.02.2012**
(21) Anmeldenummer: 09716674.8
(22) Anmeldetag: 04.03.2009
(51) Int. Cl.: A23G 1/10, A23G 1/18

(54) **VERFAHREN UND VORRICHTUNG ZUM VEREDELN VON FLIESSFÄHIGEN MASSEN**
METHOD AND DEVICE FOR REFINING FLOWABLE MASSES
PROCÉDÉ ET DISPOSITIF DESTINÉS À AMÉLIORER DES PÂTES FLUIDES

(30) Priorität: 05.03.2008 DE 102008012772
(43) Veröffentlichungstag der Anmeldung: 08.12.2010
(73) Patentinhaber: Bühler AG, 9240 Uzwil (CH)
(72) Erfinder: KELLER, Marco, CH-8514 Bissegg (CH); GERBER, Stefan, CH-8400 Winterthur (CH); BRAUN, Peter, CH-8280 Kreuzlingen (CH)
(74) Vertreter: Hepp Wenger Ryffel AG
(86) Internationale Anmeldenummer: PCT/CH2009/000086
(87) Internationale Veröffentlichungsnummer: WO 2009/109059

(56) Entgegenhaltungen:
- WO-A1-02/071858
- DE-B- 1 020 856
- US-A- 3 985 607

## Beschreibung

Die Erfindung bezieht sich auf ein Verfahren und eine Vorrichtung zum Veredeln fliessfähiger Massen, insbesondere fliessfähiger kakaohaltiger oder schokoladeartiger Fettmassen.

Bei der Kakaoverarbeitung werden fermentierte und geröstete Kakaobohnen vermahlen, wodurch mehr oder weniger flüssige Kakaomasse gewonnen wird. In der Regel wird hiervon ein Teil des in den Kakaobohnen enthaltenen Fettes, die Kakaobutter, abgepresst. Aus dem verbleibenden fettärmeren Teil erhält man Kakaopulver. Zur Herstellung von Schokolade werden Kakaomasse, Kakaobutter, Kristallzucker, Milchpulver und ggf. andere Fette sowie Emulgator vermischt.

Zur Veredelung von Kakaomassen oder Schokolademassen kommen traditionell Walzwerke und Conchen zum Einsatz.

Weitere bekannte Verfahren zur Veredelung von Kakao- oder Schokoladenmassen verwenden einen Dünnschichtverdampfer z.B. gemäss der US 3 985 607 oder einen statischen Mischer z.B. gemäss der EP 1 365 658.

Der Erfindung liegt die Aufgabe zugrunde, fliessfähige Massen, insbesondere fliessfähige kakaohaltige oder schokoladeartige Fettmassen, kostengünstig zu veredeln, indem in der Masse enthaltene ungewollte Stoffe effizient und schonend entfernt und/oder gewollte Stoffe in die Masse effizient und schonend eingearbeitet werden.

Diese Aufgabe wird gemäss Anspruch 1 verfahrensmässig und gemäss Anspruch 5 oder 8 vorrichtungsmässig gelöst. Vorteilhafte Ausführungsformen sind in den jeweiligen abhängigen Ansprüchen offenbart.

Das erfindungsgemässe Verfahren weist die folgenden Schritte auf:
S1) Bewegen der fliessfähigen Masse zu einem Portionierglied, das in einem Gas enthaltenden Raumbereich angeordnet ist;
S2) Portionieren der bewegten fliessfähigen Masse mittels des Portioniergliedes in einzelne Masse-Portionen, die durch den gashaltigen Raumbereich bewegt werden;
S3) Auftreffenlassen der durch den Raumbereich bewegten Masse auf eine den Raumbereich angrenzende Prallfläche, so dass die Masse unter Einwirkung zumindest der Gravitationskraft entlang der Prallfläche fliesst; und
S4) Zusammenführen der entlang der Prallfläche geflossenen veredelten Masse an einem Sammelpunkt.

Durch das Portionieren der Masse entsteht ein günstiges Oberfläche-Volumen-Verhältnis bei den Masse-Portionen, wodurch der Stoffaustausch zwischen dem gasenthaltenden Raumbereich und den durch ihn hindurch bewegten Masse-Portionen begünstigt wird. Dieser Stoffaustausch wird durch das Auftreffen der Masse-Portionen auf die Prallfläche und die so erzeugte Verformung der Masse-Portionen sowie durch das anschliessende Benetzen der Prallfläche und Fliessen entlang der Prallfläche noch weiter begünstigt.

Erfindungsgemäß wird als Portionierglied eine Düse verwendet, wobei das Portionieren der Masse durch Hindurchbewegen der Masse durch die Düse erfolgt. Vorzugsweise besitzt das Portionierglied eine Vielzahl parallel geschalteter Düsen, wobei das Portionieren der Masse durch paralleles Hindurchbewegen der Masse durch die Düsen erfolgt. Die Düse bzw. die Vielzahl der Düsen können Mehrstoffdüsen sein, durch die zusammen mit der zu veredelnden fliessfähigen Masse noch mindestens eine weitere Substanz hindurchgeführt und mit der Masse vermischt wird, so dass die Masse-Portionen neben der fliessfähigen Masse noch mindestens die eine weitere Substanz enthalten. Bei einer vorteilhaften Ausführung erfolgt das Portionieren der Masse durch Vibrieren des Portioniergliedes und/oder der Masse bzw. wird das Portionieren dadurch zumindest unterstützt.

Bei Bedarf kann die Abfolge der Schritte S1) bis S4) mehrmals durchlaufen werden.

Der Masse können vor oder im oder nach dem Mischer weitere Komponenten, insbesondere Flüssigkeiten, beigemischt werden.

Ein weiterer statischer und/oder dynamischer Mischer und/oder ein Scherelement kann in der Masse-Zufuhrleitung angeordnet sein, wobei dieses Bauteil die Masse mit dem Gas und/oder der Flüssigkeit mischt.

Vorzugsweise hat das Gas einen Druck von 0.1 bar bis 5 bar. Besonders vorteilhaft sind Drücke von 0.5 bar bis 2 bar, insbesondere von 1.01 bar bis 1.3 bar. Das Arbeiten mit geringem Überdruck zur Atmosphäre verhindert das Ansaugen von Fremdgasen, und die Wände der den gashaltigen Raumbereich definierenden Kammer können in Leichtbauweise erstellt werden.

Das erfindungsgemässe Verfahren eignet sich besonders gut zur Veredelung von fliessfähigen Fettmassen, insbesondere kakaohaltigen oder schokoladeartigen Fettmassen. Zweckmässigerweise wird dabei:
➢ die Temperatur der Fettmasse vor dem Durchlaufen der Schritte S1) bis S4) auf 20°C bis 300°C gebracht; und/oder
➢ die Temperatur der Fettmasse während der Schritte S1) bis S4)
   auf 20°C bis 300°C gehalten; wobei vorzugsweise
➢ die Temperatur des Gases während der Schritte S1) bis S4) 20 bis 300°C beträgt.

Als besonders bevorzugter Temperaturbereich der Masse bzw. des Gases während Schritte S1) bis S4) gilt 30°C bis 150°C.

Die Temperatur der Masse kann nach dem Durchlaufen der Schritte S1) bis S4) mittels eines Wärmetauschers auf 40 bis 150°C gebracht werden.

Die mittels Wärmetauscher gewonnene Energie, insbesondere Wärme, von der abgeführten Masse kann der zugeführten Masse zugeführt werden.

Die Masse kann vor, während oder nach dem Durchlaufen der Schritte S1) bis S4) mit Wasser und/oder weiteren Flüssigkeiten gemischt werden, wobei die weiteren Flüssigkeiten Fette oder Kohlenhydratlösungen sein können und ggf. Aromastoffe, Wirkstoffe oder dgl. enthalten.

Ferner kann die Masse mit Alkalilösungen, wie beispielsweise Pottasche, oder Gasen gemischt werden.

Die erfindungsgemässe Vorrichtung weist die folgenden Elemente auf:
➢ ein Portionierglied in einem gashaltigen Raumbereich zum Portionieren von bewegter fliessfähiger Masse in einzelne Masse-Portionen und zum Abgeben bewegter Masse-Portionen in den gashaltigen Raumbereich;
➢ eine an den Raumbereich angrenzende Prallfläche zum Auftreffenlassen der durch den Raumbereich bewegten Masse, wobei die Masse unter Einwirkung zumindest der Gravitationskraft entlang der Prallfläche fliessen kann; und
➢ ein Sammelglied zum Zusammenführen von entlang der Prallfläche fliessender veredelter Masse an einem Sammelpunkt.

Erfindungsgemäß enthält das Portionierglied eine Düse, durch welche die Masse zum Portionieren hindurchbewegbar ist. Besonders vorteilhaft ist es, wenn das Portionierglied eine Vielzahl parallel geschalteter Düsen aufweist, durch welche die Masse zum Portionieren parallel hindurchbewgbar ist. Dies ermöglicht hohe Massen-Durchsätze. Bei einer vorteilhaften Ausführung sind die Düse bzw. die Vielzahl der Düsen Mehrstoffdüsen. Dadurch lassen sich gezielt weitere Stoffe, insbesondere Flüssigkeiten, in die Masse einmischen. Vorzugsweise besitzt das Portionierglied ein Vibrationsglied zum Vibrieren des Portionierglieds und/oder der in oder an ihm bewegten Masse.

Eine weitere erfindungsgemässe Vorrichtung weist die folgenden Elemente auf:
➢ ein Schleuderglied, das zumindest in einem Teilbereich seiner Oberfläche eine Schleuderfläche aufweist, in einem mit Gas befüllbaren Raumbereich, wobei das Schleuderglied derart bewegbar ist, dass die Schleuderfläche zumindest während eines Teils ihrer Bewegung eine beschleunigte Bewegung mit in Betrag und/oder Richtung veränderlicher Geschwindigkeit durchführt;
➢ ein Mittel zum Heranfördern zu veredelnder Masse an die Schleuderfläche des bewegbaren Schleuderglieds;
➢ eine an den Raumbereich angrenzende Prallfläche zum Auftreffenlassen von durch den Raumbereich geworfener Masse derart, dass die Masse unter Einwirkung zumindest der Gravitationskraft entlang der Prallfläche fliessen kann; und
➢ ein Mittel zum Zusammenführen entlang der Prallfläche geflossener veredelter Masse an einem Sammelpunkt.
Erfindungsgemäß ist wenigstens ein Strukturelement, insbesondere ein Laufrad, zur gezielten Gasbewegung in dem Raumbereich angeordnet.

Das Portionieren der Masse erfolgt hier mittels des Schleuderglieds durch das Wegschleudern der Masse von der Schleuderfläche und durch das Gas in dem Raumbereich, wodurch aufgrund des grossen Oberfläche-Volumen-Verhältnis bei den Masse-Portionen der Stoffaustausch zwischen dem gasenthaltenden Raumbereich und den durch ihn hindurch bewegten Masse-Portionen begünstigt wird. Der Stoffaustausch wird hier aber nicht nur durch das Auftreffen der Masse-Portionen auf die Prallfläche und die so erzeugte Verformung der Masse-Portionen sowie durch das anschliessende Belegen der Prallfläche und Fliessen entlang der Prallfläche begünstigt. Schon vor oder nach dem Wegschleudern bzw. Portionieren der Masse wird nämlich beim Heranfördern der zu veredelnden Masse an die bewegte Schleuderfläche und beim Kontaktieren der bewegten Schleuderfläche mit der an sie herangeführten Masse die Masse entlang der Schleuderfläche fliessend und diese benetzend ausgebreitet. Dieses Ausbreiten führt zur Bildung einer dünnen Masse-schicht mit grossem Oberfläche-Volumen-Verhältnis. Die zu veredelnde Masse bildet somit während ihrer Behandlung zweimal eine dünne Masse-Schicht, die jeweils entlang einer festen Oberfläche fliesst, und liegt einmal in Form von Masse-Portionen vor, die durch den gashaltigen Raum fallen bzw. durch diesen geworfen werden. Das Schleuderglied bietet den Vorteil, dass mit nur einem Schleuderglied schon eine relativ grosse Menge an Masse vereinzelt, d.h. portioniert werden kann.

Zweckmässigerweise wird das in dem Raumbereich enthaltene Gas relativ zu der Prallfläche in Strömung versetzt. Dadurch wird auch der Stoffaustausch des entlang der Prallfläche fliessenden Masse-Films begünstigt. Dabei ist es besonders vorteilhaft, wenn. die Strömung des in dem Raumbereich enthaltenen Gases mit dem

Bewegen des Schleudergliedes gekoppelt erfolgt. Vorzugsweise wird die Strömung des Gases durch das Schleuderglied selbst erzeugt, das hierfür spezielle Formationen, wie Blätter, Schaufeln, Paddel etc. aufweist, die mit dem Schleuderglied antriebsmässig gekoppelt und/oder entkoppelt oder mit diesem starr verbunden sind. Die antriebsmässige Kopplung kann über ein Getriebe erfolgen.

Die Strömung des Gases entlang der Prallfläche kann vorwiegend laminar erfolgen. Sie kann aber auch entlang der Prallfläche eine Driftkomponente parallel zur Prallfläche und eine Verwirbelungskomponente aufweisen. Diese Art der Strömung lässt sich über einen grossen Bereich von Betriebsbedingungen (Geschwindigkeit der Formationen, Abmessungen des gashaltigen Raumbereichs) recht einfach erzeugen.

Die Strömung des Gases relativ zur Prallfläche kann je nach Bedarf eine Durchströmung des Raumbereichs mit einer Strömungskomponente entgegengesetzt oder gleichgerichtet zur Flussrichtung der Masse entlang der Prallfläche aufweisen. So kann z.B. eine durch die Masse-Gravitationskraft getriebene Strömung der Masse-Schicht an der Prallfläche begünstigt oder gehemmt werden, wodurch sich die Verweilzeit der Masse an der Prallfläche über weite Bereiche einstellen lässt.

Die Strömung des Gases kann auch gegen die Prallfläche gerichtet erfolgen. Durch Einstellen des Winkels zwischen der Gasströmung und der Prallfläche und/oder durch Einstellen der Geschwindig keit der Gasströmung kann die Masse-Schicht an der Prallfläche, insbesondere deren Dicke, beeinflusst werden.

Wie erwähnt, wird die Masse beim Wegschleudern in einzelne Masse-Portionen vereinzelt, bevor sie an der Schleuderfläche zu einem Film ausgebreitet wird. Vorzugsweise wird die Masse zu Tropfen, Fäden oder Lamellen vereinzelt. Dies kann durch geeignete Formationen an dem Schleuderglied erreicht werden.

Bei einer weiteren besonders vorteilhaften Ausführung wird vor dem Heranfördern der Masse an die bewegte Schleuderfläche die zu veredelnde Masse durch einen Mischer, insbesondere einen statischen und/oder dynamischen Mischer und/oder eine Aufschäumvorrichtung, hindurch transportiert. Der Transport der zu veredelnden Masse durch den Mischer erfolgt dabei vorzugsweise unter Einwirkung zumindest der Gravitationskraft auf die Masse und/oder unter Einwirkung zumindest einer Schleppkraft auf die Masse.

Zweckmässigerweise ist das Schleuderglied ein rotationssymmetrisches Gebilde, das um seine Rotationssymmetrie-Drehachse drehbar gelagert ist, während die Prallfläche zweckmässigerweise eine sich konzentrisch um die Rotationssymmetrie-Drehachse erstreckende Fläche ist.

Vorzugsweise ist das Schleuderglied um eine vertikale Drehachse drehbar gelagert. Besonders vorteilhaft ist es, wenn das Schleuderglied ein scheibenartiges oder tellerartiges Gebilde ist. Dadurch lassen sich grosse Masse-Oberflächen erzeugen.

Die Schleuderfläche kann sich an der Oberseite des Schleudergliedes befinden, so dass die Masse einfach unter Ausnutzung der Schwerkraft an die Schleuderfläche herangeführt werden kann. Die Schleuderfläche kann sich aber auch an der Unterseite des Schleudergliedes befinden, so dass die Masse durch ein Zusammenspiel von Schwerkraft und Masse-Geschwindigkeit beim Heranfördern (z.B. Pumpleistung) an die Schleuderfläche mit leicht veränderbarer Geschwindigkeit herangeführt werden kann.

Die Schleuderfläche kann eine konkave Fläche sein. Dies ist insbesondere für eine an der Unterseite angebrachte Schleuderfläche und beim Heranführen der Masse von unten vorteilhaft. Die Schleuderfläche kann auch eine konvexe oder plane Fläche sein. Dies ist insbesondere für eine an der Oberseite angebrachte Schleuderfläche und beim Heranführen der Masse von oben vorteilhaft.

Stattdessen oder darüber hinaus kann die Schleuderfläche Strukturelemente aufweisen. Dies können lamellenartige oder noppenartige Erhebungen und/oder rillenartige oder blindlochartige Vertiefungen sein. Als Strukturelemente können auch Schlitze oder Durchgangslöcher am Schleuderglied vorgesehen sein. An einer Abrisskante der Strukturelemente können Einschnitte und/oder Aufbauten mit unterschiedlich ausgerichteten Erstreckungsrichtungen am Tellerrand ausgebildet sind.

Zweckmässigerweise ist das Mittel zum Heranführen der Masse eine Masse-Zufuhrleitung, deren Mündung sich nahe bei der Schleuderfläche befindet und/oder zu der Schleuderfläche weist, wobei die Masse-Zufuhrleitung vorzugsweise als Hohlwelle ausgebildet ist, die mit dem Schleuderglied drehfest verbunden ist. Dies ermöglicht eine besonders kompakte rotationssymmetrische Anordnung.

Denkbar ist es, die Masse von der Masse-Zufuhrleitung auf eine Auffangwanne und von dort auf die Schleuderfläche zu führen.

Das Schleuderglied kann auch ein hin und her bewegbares Gebilde sein, und zwar vorzugsweise ein federnd gelagertes Schwingelement. Durch das Hin und Herbewegen wirken auf die Masse grosse Trägheitskräfte in wechselnder Richtung ein. Auch so kann eine gute Vereinzelung bzw. Portionierung der Masse durch Wegschleudern erreicht werden.

Das Schleuderglied kann ein radartiges Gebilde mit paddelartigen oder speichenartigen Elementen sein.

Die erfindungsgemässe Vorrichtung enthält vorzugsweise mehrere Schleuderglieder. Diese können kaskadenartig angeordnet sein, so dass die Masse im Betrieb mit mehreren Schleudergliedern in Kontakt kommt und jeweils von einem stromauf angeordneten Schleuderglied zu einem weiter stromab angeordneten Schleuderglied weitergeschleudert wird und schliesslich gegen die Prallfläche geschleudert wird. Vorzugsweise sind die mehreren Schleuderglieder an einer gemeinsamen Drehachse drehfest angebracht.

Denkbar ist es, jedes Schleuderglied durch eine Masse-Zufuhrleitung zu beschicken.

In dem Raumbereich kann ein Zylinder, insbesondere ein konusförmiger Zylinder, angeordnet sein, der einen Spalt zwischen dessen Aussenfläche und der Prallfläche generiert.

Auch die Prallfläche kann Strukturelemente aufweisen, wie z.B. noppenartige oder lamellenartige Erhebungen an den Flächen. Vorzugsweise ist die Prallfläche temperierbar. Hierfür können in der Prallflächen-Wand Hohlräume für ein Wärmeträgerfluid vorgesehen werden, oder die Prallflächen-Wand ist doppelwandig ausgebildet.

In dem Raumbereich kann wenigstens ein Hohlzylinder angeordnet sein, dessen Prallfläche bevorzugt aus Lochblech besteht. Mehrere Hohlzylinder können koaxial angeordnet sein, sodass das Schleuderglied die Oberflächen der Hohlzylinder mit Masse benetzt. Durch diese Anordnung wird die Aufprallfläche vergrössert. Die Masse fliesst nach dem Abfliessen an den Wänden der Zylinder zu einem Sammelpunkt, der unter dem Hohlzylinder angeordnet ist.

Ein Strukturelement, insbesondere ein Laufrad, führt das Gas entlang den Hohlzylinderwänden, um bestimmte in der Masse vorhandene Stoffe, z.B. Aromen, abzutransportieren.

Besonders vorteilhaft ist es, wenn das Schleuderglied Rotorblätter oder dgl. aufweist, die vorzugsweise an der Unterseite des Schleuderglieds angeordnet sind. Dadurch kann die Strömung des Gases durch das Schleuderglied selbst erzeugt werden, das hierfür spezielle Formationen, wie Blätter, Schaufeln, Paddel etc. aufweist, die mit dem Schleuderglied starr verbunden sind.

Zweckmässigerweise ist der mit Gas befüllbare Raumbereich eine Kammer, deren Innenwand zumindest partiell die Prallfläche bildet, wobei die Kammer vorzugsweise einen Teil eines Gaskreislaufs bildet. Dieser Gaskreislauf kann eine Gas-Pumpvorrichtung und/oder eine Gas-Saugvorrichtung aufweisen, die ggf. durch das mit Rotorblättern versehene Schleuderglied in der Kammer gebildet wird oder durch ein solches Schleuderglied in ihrer Pump- bzw. Saugwirkung zumindest unterstützt werden. Darüber hinaus kann der gashaltige Raumbereich Einbauten, insbesondere in Form von Leitblechen, enthalten. Vorzugsweise sind die Rotorblätter des Schleuderglieds und/oder die Leitbleche in der Kammer verstellbar. Dadurch kann die Strömung des Gases in der Kammer und an der Prallfläche beeinflusst werden. Insbesondere ist eine ggf. mehrfache Umwälzung des Gases innerhalb der Kammer und somit die Einstellung der Verweilzeit des Gases in der Kammer möglich. Dies trägt dazu bei, den Gasbedarf in der Kammer, d.h. das Verhältnis Gasdurchsatz/Massedurchsatz zu verringern.

Die Erfindung umfasst die nachfolgenden Ausführungsformen.
(i) Verfahren zum Veredeln fliessfähiger Massen, insbesondere fliessfähiger kakaohaltiger oder schokoladeartiger Fettmassen, welches die folgenden Schritte aufweist:
   S1) Bewegen der fliessfähigen Masse zu einem Portionierglied, das in einem Gas enthaltenden Raumbereich angeordnet ist;
   S2) Portionieren der bewegten fliessfähigen Masse mittels des Portioniergliedes in einzelne Masse-Portionen, die durch den gashaltigen Raumbereich bewegt werden;
   S3) Auftreffenlassen der durch den Raumbereich bewegten Masse auf eine den Raumbereich angrenzende Prallfläche, so dass die Masse unter Einwirkung zumindest der Gravitationskraft entlang der Prallfläche fliesst; und
   S4) Zusammenführen der entlang der Prallfläche geflossenen veredelten Masse an einem Sammelpunkt, wobei
   das Portionierglied eine Düse aufweist und das Portionieren der Masse durch Hindurchbewegen der Masse durch die Düse erfolgt, oder
   das Portionierglied eine Vielzahl parallel geschalteter Düsen aufweist und das Portionieren der Masse durch paralleles Hindurchbewegen der Masse durch die Düsen erfolgt.
(ii) Verfahren nach (i), dadurch gekennzeichnet, dass die Düse bzw. die Vielzahl der Düsen Mehrstoffdüsen sind, durch die zusammen mit der zu veredelnden fliessfähigen Masse noch mindestens eine weitere Substanz hindurchgeführt und mit der Masse vermischt wird.
(iii) Verfahren nach (i) oder (ii), dadurch gekennzeichnet, dass das das Portionieren der Masse durch Vibrieren des Portioniergliedes und/oder durch Vibrieren der Masse erfolgt bzw. unterstützt wird.
(iv) Verfahren nach (i) bis (iii), dadurch gekennzeichnet, dass das in dem Raumbereich enthaltene Gas relativ zu der Prallfläche in Strömung versetzt wird.
(v) Verfahren nach (i) bis (iv), dadurch gekennzeichnet, dass die Strömung des Gases entlang der Prallfläche laminar erfolgt.
(vi) Verfahren nach (i) bis (v), dadurch gekennzeichnet, dass die Strömung des Gases entlang der Prallfläche eine Driftkomponente parallel zur Prallfläche und eine Verwirbelungskomponente aufweist.
(vii) Verfahren nach (i) bis (vi), dadurch gekennzeichnet, dass die Strömung des Gases relativ zur Prallfläche eine Durchströmung des Raumbereichs mit einer Strömungskomponente entgegengesetzt oder gleichgerichtet zur Flussrichtung der Masse entlang der Prallfläche aufweist.
(viii) Verfahren nach (vii) , dadurch gekennzeichnet, dass die Strömung des Gases in einem Winkel zwischen 0 und 180° auf die Prallfläche gerichtet erfolgt.
(ix) Verfahren nach (i) bis (viii), dadurch gekennzeichnet, dass das Gas mit mindestens einem Aroma angereichert oder abgereichert wird.
(x) Verfahren nach (i) bis (IX), dadurch gekennzeichnet, dass das Gas mit weiteren gasförmigen Aromastoffen versetzt wird.
(xi) Verfahren nach (x), dadurch gekennzeichnet, dass der Transport der zu veredelnden Masse durch den Mischer unter Einwirkung zumindest der Gravitationskraft auf die Masse erfolgt.
(xii) Verfahren nach (xi) dadurch gekennzeichnet, dass der Transport der zu veredelnden Masse durch den Mischer unter Einwirkung zumindest einer Schleppkraft auf die Masse erfolgt.
(xiii) Verfahren nach (i) bis (xii), dadurch gekennzeichnet, dass die Abfolge der Schritte S1) bis S4) mehrmals durchlaufen wird.
(xiv) Verfahren nach (xi) bis (xiii), dadurch gekennzeichnet, dass ihr vor oder im Mischer weitere Komponenten beigemischt werden.
(xv) Verfahren nach (i) bis (xiv), dadurch gekennzeichnet, dass das Gas einen Druck von 0.1 bar bis 5 bar hat.
(xvi) Verfahren nach (i) bis (xv), bei welchem die zu veredelnde Masse eine fliessfähige Fettmasse, insbesondere eine kakaohaltige oder schokoladeartige Fettmasse ist.
(xvii) Verfahren nach (xiv), dadurch gekennzeichnet, dass die Temperatur der Fettmasse vor dem Durchlaufen der Schritte S1) bis S4) auf 20°C bis 300°C gebracht wird.
(xviii) Verfahren nach (xvi) oder (xvii), dadurch gekennzeichnet, dass die Temperatur der Fettmasse während der Schritte S1) bis S4) auf 20°C bis 300°C gehalten wird.
(xix) Verfahren nach (xvi) bis (xviii), dadurch gekennzeichnet, dass die Temperatur des Gases während der Schritte S1) bis S4) 20 bis 300°C beträgt.
(xx) Verfahren nach (xvi) bis (xix), dadurch gekennzeichnet, dass die Temperatur der Masse nach dem Durchlaufen der Schritte S1) bis S4) vorzugsweise mittels eines Wärmetauschers auf 40 bis 150°C gebracht wird.
(xxi) Verfahren nach (xvi) bis (xx), dadurch gekennzeichnet, dass die mittels Wärmetauscher gewonnene Energie von der abgeführten Masse der zugeführten Masse zugeführt wird.
(xxii) Verfahren nach (xvi) bis (xxi), dadurch gekennzeichnet, dass die Masse vor, während oder nach dem Durchlaufen der Schritte S1) bis S4) mit Wasser und/oder weiteren Flüssigkeiten gemischt wird.
(xxiii) Verfahren nach (xxii), dadurch gekennzeichnet, dass die weiteren Flüssigkeiten Fette oder Kohlenhydratlösungen sind und ggf. Aromastoffe, Wirkstoffe oder dgl. enthalten.
(xxiv) Verfahren nach (i) bis (xxiii), dadurch gekennzeichnet, dass die Masse durch wenigstens ein Scherelement in einer Massezufuhrleitung oder einer Masseableitung oder in dem Raumbereich (4) bewegt, insbesondere gepumpt, wird.
(xxv) Vorrichtung zum Veredeln fliessfähiger Massen, insbesondere zur Durchführung eines Verfahrens gemäss (i) bis (v), welche aufweist
   ➢ ein Portionierglied (2) in einem gashaltigen Raumbereich (4) zum Portionieren von bewegter fliessfähiger Masse in einzelne Masse-Portionen und zum Abgeben bewegter Masse-Portionen in den gashaltigen Raumbereich (4);
   ➢ eine an den Raumbereich angrenzende Prallfläche (8) zum Auftreffenlassen der durch den Raumbereich (4) bewegten Masse, wobei die Masse unter Einwirkung zumindest der Gravitationskraft entlang der Prallfläche (8) fliessen kann; und
   ➢ ein Sammelglied (10) zum Zusammenführen von entlang der Prallfläche fliessender veredelter Masse an einem Sammelpunkt (12), wobei
   das Portionierglied eine Düse aufweist, durch welche die Masse zum Portionieren hindurchbewegbar ist, oder
   das Portionierglied eine Vielzahl parallel geschalteter Düsen aufweist, durch welche die Masse zum Portionieren parallel hindurchbewgbar ist.
(xxvi) Vorrichtung nach (xxv) , dadurch gekennzeichnet, dass die Düse bzw. die Vielzahl der Düsen Mehrstoffdüsen sind.
(xxvii) Vorrichtung nach (xxv) bis (xxvi), dadurch gekennzeichnet, dass Portionierglied ein Vibrationsglied zum Vibrieren des Portionierglieds aufweist.
(xxviii) Vorrichtung zum Veredeln fliessfähiger pastöser Massen, welche aufweist:
   ➢ ein Schleuderglied (2), das zumindest in einem Teilbereich seiner Oberfläche eine Schleuderfläche (2a) aufweist, in einem mit Gas befüllbaren Raumbereich (4), wobei das Schleuderglied (2) derart bewegbar ist, dass die Schleuderfläche (2a) zumindest während eines Teils ihrer Bewegung eine beschleunigte Bewegung mit in Betrag und/oder Richtung veränderlicher Geschwindigkeit durchführt;
   ➢ ein Mittel (6) zum Heranfördern zu veredelnder Masse an die Schleuderfläche (2a) des bewegbaren Schleuderglieds (2) ;
   ➢ eine an den Raumbereich (4) angrenzende Prallfläche (8) zum Auftreffenlassen von durch den Raumbereich (4) geworfener Masse derart, dass die Masse unter Einwirkung zumindest der Gravitationskraft entlang der Prallfläche (8) fliessen kann; und
   ➢ ein Mittel (10) zum Zusammenführen entlang der Prallfläche (8) geflossener veredelter Masse an einem Sammelpunkt (12), wobei wenigstens ein Strukturelement (21), insbesondere ein Laufrad, zur Gasbewegung in dem Raumbereich (4) angeordnet ist.
(xxix) Vorrichtung nach (xxviii), dadurch gekennzeichnet, dass das Schleuderglied ein rotationssymmetrisches Gebilde ist, das um seine Rotationssymmetrie-Drehachse drehbar gelagert ist.
(xxx) Vorrichtung nach (xxix), dadurch gekennzeichnet, dass die Prallfläche eine sich konzentrisch um die Rotationssymmetrie-Drehachse erstreckende Fläche ist.
(xxxi) Vorrichtung nach (xxviii) bis (xxx), dadurch gekennzeichnet, dass das Schleuderglied um eine vertikale Drehachse drehbar gelagert ist.
(xxxii) Vorrichtung nach (xxviii) bis (xxxi), dadurch gekennzeichnet, dass das Schleuderglied ein scheibenartiges oder tellerartiges Gebilde ist.
(xxxiii) Vorrichtung nach (xxxi) oder (xxxii), dadurch gekennzeichnet, dass sich die Schleuderfläche an der Ober- und/oder Unterseite des Schleudergliedes befindet.
(xxxiv) Vorrichtung nach (xxxi) bis (xxxiii), dadurch gekennzeichnet, dass die Schleuderfläche eine konkave oder konvexe Fläche ist.
(xxxv) Vorrichtung nach (xxxi) bis (xxxiv), dadurch gekennzeichnet, dass die Schleuderfläche Strukturelemente aufweist.
(xxxvi) Vorrichtung nach (xxviii) bis (xxxv), dadurch gekennzeichnet, dass das Mittel zum Heranführen der Masse eine Masse-Zufuhrleitung ist, deren Mündung sich nahe bei der Schleuderfläche befindet und/oder zu der Schleuderfläche weist.
(xxxvii) Vorrichtung nach (xxxvi), dadurch gekennzeichnet, dass die Masse-Zufuhrleitung als Hohlwelle ausgebildet ist, die mit dem Schleuderglied drehfest verbunden ist.
(xxxviii) Vorrichtung nach (xxviii) oder (xxxvii), dadurch gekennzeichnet, dass das Schleuderglied ein federnd gelagertes Schwingelement ist.
(xxxix) Vorrichtung nach (xxviii) bis (xxxvi), dadurch gekennzeichnet, dass das Schleuderglied ein radartiges Gebilde mit paddelartigen oder speichenartigen Elementen ist.
(xL) Vorrichtung nach (xxviii) bis (xxxix), dadurch gekennzeichnet, dass sie mehrere Schleuderglieder aufweist.
(xLi) Vorrichtung nach (xL), dadurch gekennzeichnet, dass die mehreren Schleuderglieder an einer gemeinsamen Drehachse drehfest angebracht sind.
(xLii) Vorrichtung nach (xxviii) bis (xLi), dadurch gekennzeichnet, dass die Prallfläche Strukturelemente aufweist.
(xLiii) Vorrichtung nach (xxviii) bis (xLii), dadurch gekennzeichnet, dass die Prallfläche temperierbar ist.
(xLiv) Vorrichtung nach (xxvii) bis (xLiii), dadurch gekennzeichnet, dass die Strukturelemente noppenartige oder lamellenartige Erhebungen an den Flächen sind.
(xLv) Vorrichtung nach (xxxi) bis (xLiv), dadurch gekennzeichnet, dass das Schleuderglied Rotorblätter aufweist.
(xLvi) Vorrichtung nach (xLv), dadurch gekennzeichnet, dass die Rotorblätter an der Unterseite des Schleuderglieds angeordnet sind.
(xLvii) Vorrichtung (xxv) bis (xLvi), dadurch gekennzeichnet, dass der gashaltige Raumbereich Einbauten, insbesondere in Form von Leitblechen, enthält.
(xLviii) Vorrichtung nach (xxv) bis (xLvii), dadurch gekennzeichnet, dass ein Scherelement in einer Massenzuleitung und/oder einer Massenableitung und/oder in dem Raumbereich (4) angeordnet ist.
(xLix) Vorrichtung nach (xLviii), dadurch gekennzeichnet, dass das Scherelement aus mindestens einem Rotor und mindestens einem Stator besteht.
(L) Vorrichtung nach (xxv) bis (xLix), dadurch gekennzeichnet, dass in dem Raumbereich ein Zylinder, insbesondere ein konusförmiger Zylinder, angeordnet ist.
(Li) Vorrichtung nach (L), dadurch gekennzeichnet, dass der Zylinder in dem Raumbereich einen Spalt zwischen dessen Aussenfläche und der Prallfläche generiert.
(Lii) Vorrichtung nach (xxv) bis (Li), dadurch gekennzeichnet, dass in dem Raumbereich wenigstens ein Hohlzylinder angeordnet ist.

Weitere vorteilhafte Weiterbildungen der Erfindung sind in den Unteransprüchen definiert.

Im Folgenden wird ein Ausführungsbeispiel der Erfindung anhand der folgenden Zeichnung beschrieben. Dabei zeigt:

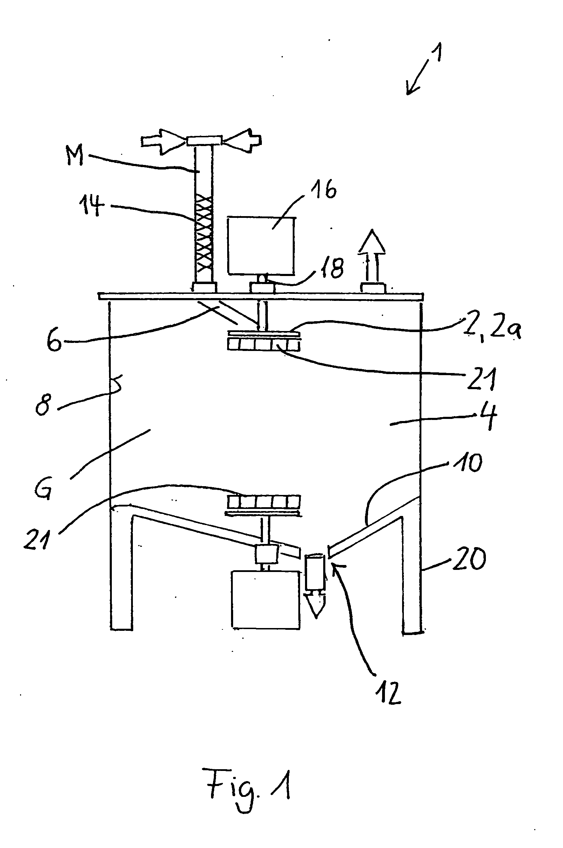

Fig. 1 ein erstes Ausführungsbeispiel der vorliegenden Erfindung,

In der Figur 1 ist eine insgesamt mit 1 bezeichnete Vorrichtung zum Veredeln fliessfähiger Massen M gezeigt. Die Vorrichtung 1 ruht auf einem Gestell 20.

Ein Schleuderglied 2, das in einem Teilbereich seiner Oberfläche eine Schleuderfläche 2a aufweist, ist in einem mit Gas G befüllbaren Raumbereich 4 angeordnet. Das Schleuderglied 2 wird durch einen Motor 16 über eine Drehachse 18 angetrieben.

Das Schleuderglied 2 ist derart rotierbar, dass die Schleuderfläche 2a während ihrer Bewegung ständig eine beschleunigte Bewegung mit in Betrag und/oder Richtung veränderlicher Geschwindigkeit durchführt (Rotationsbewegung). Dadurch kann Masse M von der Schleuderfläche 2a weggeschleudert werden.

Eine Leitung 6 dient zum Heranfördern zu veredelnder Masse M an die Schleuderfläche 2a des bewegbaren Schleuderglieds 2. Dies kann allein durch die Gravitationskraft und/oder mittels einer (nicht dargestellten Pumpe) erfolgen.

Eine an den Raumbereich 4 angrenzende Prallfläche 8 der den Raumbereich 4 begrenzenden Kammerwand dient zum Auftreffenlassen von durch den Raumbereich 4 geworfener Masse derart, dass die Masse unter Einwirkung zumindest der Gravitationskraft entlang der Prallfläche 8 nach unten fliessen und diese benetzen kann.

Ein sich unten an die Prallfläche 8 anschliessender Trichter 10 dient zum Zusammenführen von entlang der Prallfläche 8 geflossener veredelter Masse M' an einem Sammelpunkt 12.

Stromauf von der Leitung 6 ist ein statischer Mischer 14 angeordnet, in dem die zu veredelnde Masse M zusammen mit einem Gas G, z.B. Luft oder nur Stickstoff, als Schleppkraft erzeugendem Medium und unter Einwirkung der Schwerkraft transportiert wird. Anstelle des Gases G kann hier auch eine Flüssigkeit in die Masse M eingemischt werden. Denkbar ist es, Gas und Flüssigkeit einzumischen.

Anstelle des Schleuderglieds 2 kann auch eine Düse (nicht dargestellt) zur Portionierung bzw. Vereinzelung der Masse M verwendet werden.

Die Portionierung bzw. Vereinzelung der Masse M kann durch Vibrieren der (nicht gezeigten) Düse bzw. des Schleuderglieds 2 mittels eines (nicht dargestellten) Vibrogliedes (mechanische Schwingungsquelle) unterstützt werden.

Zusätzlich ist wenigstens ein Strukturelement 21, insbesondere ein Laufrad, angeordnet, welches das in dem Raumbereich 4 enthaltene Gas entlang den Prallflächen 8 führt, um bestimmte in der Masse vorhandene Stoffe, z.B. Aromen, abzutransportieren.

Die Vorrichtung kann ferner ein Scherelement in einer Massenzuleitung und/oder einer Massenableitung und/oder in dem Raumbereich (4) aufweisen, wobei das Scherelement aus mindestens einem Rotor und mindestens einem Stator besteht und wenigstens eine Oberfläche noppenartige oder lamellenartige oder zackenartige Verformungen aufweist. Dieses Scherelement erzeugt eine Pumpwirkung und verbessert zusätzlich die Qualität der Masse, wobei insbesondere die Masse entgast und entfeuchtet und in der Viskosität erniedrigt wird.

## Patentansprüche

1. Verfahren zum Veredeln fliessfähiger Massen, insbesondere fliessfähiger kakaohaltiger oder schokoladeartiger Fettmassen, welches die folgenden Schritte aufweist:
S1) Bewegen der fliessfähigen Masse zu einem Portionierglied, das in einem Gas enthaltenden Raumbereich angeordnet ist;
S2) Portionieren der bewegten fliessfähigen Masse mittels des Portioniergliedes in einzelne Masse-Portionen, die durch den gashaltigen Raumbereich bewegt werden;
S3) Auftreffenlassen der durch den Raumbereich bewegten Masse auf eine den Raumbereich angrenzende Prallfläche, so dass die Masse unter Einwirkung zumindest der Gravitationskraft entlang der Prallfläche fliesst; und
S4) Zusammenführen der entlang der Prallfläche geflossenen veredelten Masse an einem Sammelpunkt;
**dadurch gekennzeichnet, dass** das Portionierglied eine Düse oder eine Vielzahl parallel geschalteter Düsen aufweist und dass das Portionieren der Masse durch Hindurchbewegen der Masse durch die Düse oder durch paralleles Hindurchbewegen der Masse durch die Düsen erfolgt.

2. Verfahren nach Anspruch 1, **dadurch gekennzeichnet, dass** die Düse bzw. die Vielzahl der Düsen Mehrstoffdüsen sind, durch die zusammen mit der zu veredelnden fliessfähigen Masse noch mindestens eine weitere Substanz hindurchgeführt und mit der Masse vermischt wird.

3. Verfahren nach einem der Ansprüche 1 oder 2, **dadurch gekennzeichnet, dass** das das Portionieren der Masse durch Vibrieren des Portioniergliedes und/oder durch Vibrieren der Masse erfolgt bzw. unterstützt wird.

4. Verfahren nach einem der Ansprüche 1 bis 3, **dadurch gekennzeichnet, dass** die Masse durch wenigstens ein Scherelement in einer Massezufuhrleitung oder einer Masseableitung oder in dem Raumbereich (4) bewegt, insbesondere gepumpt, wird.

5. Vorrichtung zum Veredeln fliessfähiger Massen, insbesondere zur Durchführung eines Verfahrens gemäss einem der Ansprüche 1 bis 4, welche aufweist
➢ ein Portionierglied (2) in einem gashaltigen Raumbereich (4) zum Portionieren von bewegter fliessfähiger Masse in einzelne Masse-Portionen und zum Abgeben bewegter Masse-Portionen in den gashaltigen Raumbereich (4);
➢ eine an den Raumbereich angrenzende Prallfläche (8) zum Auftreffenlassen der durch den Raumbereich (4) bewegten Masse, wobei die Masse unter Einwirkung zumindest der Gravitationskraft entlang der Prallfläche (8) fliessen kann; und
➢ ein Sammelglied (10) zum Zusammenführen von entlang der Prallfläche fliessender veredelter Masse an einem Sammelpunkt (12); **dadurch gekennzeichnet, dass** das Portionierglied eine Düse oder eine Vielzahl parallel geschalteter Düsen aufweist, durch welche die Masse zum Portionieren hindurchbewegbar ist,

6. Vorrichtung nach Anspruch 5, **dadurch gekennzeichnet, dass** die Düse bzw. die Vielzahl der Düsen Mehrstoffdüsen sind.

7. Vorrichtung nach einem der Ansprüche 5 oder 6, **dadurch gekennzeichnet, dass** Portionierglied ein Vibrationsglied zum Vibrieren des Portionierglieds aufweist.

8. Vorrichtung zum Veredeln fliessfähiger pastöser Massen, welche aufweist:
➢ ein Schleuderglied (2), das zumindest in einem Teilbereich seiner Oberfläche eine Schleuderfläche (2a) aufweist, in einem mit Gas befüllbaren Raumbereich (4), wobei das Schleuderglied (2) derart bewegbar ist, dass die Schleuderfläche (2a) zumindest während eines Teils ihrer Bewegung eine beschleunigte Bewegung mit in Betrag und/oder Richtung veränderlicher Geschwindigkeit durchführt;
➢ ein Mittel (6) zum Heranfördern zu veredelnder Masse an die Schleuderfläche (2a) des bewegbaren Schleuderglieds (2);
➢ eine an den Raumbereich (4) angrenzende Prallfläche (8) zum Auftreffenlassen von durch den Raumbereich (4) geworfener Masse derart, dass die Masse unter Einwirkung zumindest der Gravitationskraft entlang der Prallfläche (8) fliessen kann; und
➢ ein Mittel (10) zum Zusammenführen entlang der Prallfläche (8) geflossener veredelter Masse an einem Sammelpunkt (12)., **dadurch gekennzeichnet, dass** wenigstens ein Strukturelement (21), insbesondere ein Laufrad, zur Gasbewegung in dem Raumbereich (4) angeordnet ist.

9. Vorrichtung nach Anspruch 8, **dadurch gekennzeichnet, dass** das Schleuderglied um eine vertikale Drehachse drehbar gelagert ist, wobei das Schleuderglied insbesondere ein scheibenartiges oder tellerartiges Gebilde ist und/oder wobei sich die Schleuderfläche insbesondere an der Ober- und/oder Unterseite des Schleudergliedes befindet.

10. Vorrichtung nach einem der Ansprüche 8 oder 9, **dadurch gekennzeichnet, dass** das Mittel zum Heranführen der Masse eine Masse-Zufuhrleitung ist, deren Mündung sich nahe bei der Schleuderfläche befindet und/oder zu der Schleuderfläche weist, wobei insbesondere die Masse-Zufuhrleitung als Hohlwelle ausgebildet ist, die mit dem Schleuderglied drehfest verbunden ist.

11. Vorrichtung nach Anspruch 8 oder 10, **dadurch gekennzeichnet, dass** das Schleuderglied ein federnd gelagertes Schwingelement ist.

12. Vorrichtung nach einem der Ansprüche 8 bis 11, **dadurch gekennzeichnet, dass** ein Scherelement in einer Massenzuleitung und/oder einer Massenableitung und/oder in dem Raumbereich (4) angeordnet ist, wobei das Scherelement insbesondere aus mindestens einem Rotor und mindestens einem Stator besteht.

13. Vorrichtung nach einem der Ansprüche 8 bis 12, **dadurch gekennzeichnet, dass** in dem Raumbereich ein Zylinder, insbesondere ein konusförmiger Zylinder, und/ oder wenigstens ein Hohlzylinder angeordnet ist, wobei der Zylinder insbesondere in dem Raumbereich einen Spalt zwischen dessen Aussenfläche und der Prallfläche generiert.

## Claims

1. Method for the refinement of flowable masses, in particular flowable cocoa-containing or chocolate-like fatty masses, which has the following steps:
S1) movement of the flowable mass to a portioning member which is arranged in a gas-containing space region;
S2) portioning of the moved flowable mass by means of the portioning member into individual mass portions which are moved through the gas-containing space region;
S3) impingement of the mass moved through the space region onto an impact surface adjacent to the space region, so that the mass flows along the impact surface under the action of at least gravitational force; and
S4) convergence of the refined mass which has flowed along the impact surface at a collection point;
**characterized in that** the portioning member has a nozzle or a multiplicity of parallel-connected nozzles, and **in that** the portioning of the mass takes place as a result of the movement of the mass through the nozzle or as a result of the parallel movement of the mass through the nozzles.

2. Method according to Claim 1, **characterized in that** the nozzle or the multiplicity of nozzles are multi-substance nozzles, through which at least one further substance is also led together with the flowable mass to be refined and is mixed with the mass.

3. Method according to either one of Claims 1 and 2, **characterized in that** the portioning of the mass takes place or is assisted by the vibration of the portioning member and/or by the vibration of the mass.

4. Method according to one of Claims 1 to 3, **characterized in that** the mass is moved, in particular pumped, by at least one shearing element in a mass supply line or a mass discharge line or in the space region (4).

5. Apparatus for the refinement of flowable masses, in particular for carrying out a method according to one of Claims 1 to 4, which has
➢ a portioning member (2) in a gas-containing space region (4) for the portioning of moved flowable mass into individual mass portions and for the transfer of moved mass portions into the gas-containing space region (4);
➢ an impact surface (8), adjacent to the space region, for the impingement of the mass moved through the space region (4), the mass being capable of flowing along the impact surface (8) under the action of at least gravitational force; and
➢ a collecting member (10) for the convergence of refined mass flowing along the impact surface at a collection point (12); **characterized in that** the portioning member has a nozzle or a multiplicity of parallel-connected nozzles, through which the mass can be moved for portioning.

6. Apparatus according to Claim 5, **characterized in that** the nozzle of the multiplicity of nozzles are multi-substance nozzles.

7. Apparatus according to either one of Claims 5 and 6, **characterized in that** the portioning member has a vibration member for vibrating the portioning member.

8. Apparatus for the refinement of flowable pasty masses, which has:
➢ a a whirler member (2), which has a whirler surface (2a) at least in a part-region of its surface, in a gas-fillable space region (4), the whirler member (2) being movable in such a way that the whirler surface (2a) executes, at least during part of its movement, an accelerated movement at a speed variable in terms of amount and/or direction;
➢ a means (6) for delivering mass to be refined to the whirler surface (2a) of the movable whirler member (2);
➢ an impact surface (8), adjacent to the space region (4), for the impingement of mass thrown through the space region (4), in such a way that the mass can flow along the impact surface (8) under the action of at least gravitational force; and
➢ a means (10) for the convergence of refined mass which has flowed along the impact surface (8) at a collection point (12), **characterized in that** at least one structural element (21), in particular an impeller, is arranged for the gas movement in the space region (4).

9. Apparatus according to Claim 8, **characterized in that** the whirler member is mounted rotatably about a vertical axis of rotation, the whirler member being, in particular, a disc-like or dish-like structure, and/or the whirler surface being located, in particular, on the topside and/or the underside of the whirler member.

10. Apparatus according to either one of Claims 8 and 9, **characterized in that** the means for delivering the mass is a mass supply line, the mouth of which is located near the whirler surface and/or points towards the whirler surface, in particular the mass supply line being designed as a hollow shaft which is connected fixedly in rotation to the whirler member.

11. Apparatus according to Claim 8 or 10, **characterized in that** the whirler member is a resiliently mounted oscillating element.

12. Apparatus according to one of Claims 8 to 11, **characterized in that** a shearing element is arranged in a mass supply line and/or a mass discharge line and/or in the space region (4), the shearing element consisting, in particular, of at least one rotor and of at least one stator.

13. Apparatus according to one of Claims 8 to 12, **characterized in that** a cylinder, in particular a conical cylinder, and/or at least one hollow cylinder is arranged in the space region, in particular the cylinder generating in the space region a gap between its outer surface and the impact surface.

## Revendications

1. Procédé d'affinage de pâte fluide, en particulier de pâte grasse fluide contenant du cacao ou de type chocolat, le procédé présentant les étapes suivantes :
S1) la pâte fluide est déplacée vers un organe de division en portions disposé dans une partie de l'espace contenant un gaz,
S2) la pâte fluide déplacée est divisée en portions individuelles de pâte au moyen de l'organe de division en portions, ces portions étant déplacées dans la partie de l'espace contenant un gaz,
S3) la pâte déplacée dans la partie de l'espace est amenée à percuter une surface de percussion qui délimite la partie de l'espace de telle sorte que la pâte s'écoule le long de la surface de percussion au moins sous l'action de la gravité et
S4) la pâte affinée qui s'écoule le long de la surface de percussion est rassemblée en un point de collecte, **caractérisé en ce que**
l'organe de division en portions présente une tuyère ou plusieurs tuyères raccordées en parallèle et
**en ce que** les portions de pâte sont formées en faisant traverser la tuyère par la pâte ou en faisant traverser parallèlement les tuyères par la pâte.

2. Procédé selon la revendication 1, **caractérisé en ce que** la tuyère ou les différentes tuyères sont des tuyères à plusieurs matières qui, en même temps que la pâte fluide à affiner, sont traversées par encore au moins une autre substance qui est mélangée à la pâte.

3. Procédé selon l'une des revendications 1 ou 2, **caractérisé en ce que** la division de la pâte en portions est réalisée ou soutenue en faisant vibrer l'organe de division en portions et/ou en faisant vibrer la pâte.

4. Procédé selon l'une des revendications 1 à 3, **caractérisé en ce que** la pâte est déplacée et en particulier pompée par au moins un élément cisaillant disposé dans un conduit d'amenée de pâte, dans un conduit de sortie de pâte ou dans la partie (4) de l'espace.

5. Dispositif d'affinage de pâtes fluides, en particulier en vue de la mise en oeuvre d'un procédé selon l'une des revendications 1 à 4, le dispositif présentant :
- un organe (2) de division en portions disposé dans une partie (4) de l'espace contenant un gaz pour séparer en portions individuelles la pâte fluide déplacée et pour délivrer des portions de pâte en déplacement dans la partie d'espace (4) contenant un gaz,
- une surface de percussion (8) qui délimite la partie de l'espace et que la pâte déplacée dans la partie (4) de l'espace vient percuter, la pâte pouvant s'écouler le long de la surface de percussion (8) au moins sous l'action de la gravité et
- un organe de collecte (10) qui rassemble en un point de collecte (12) la pâte affinée qui s'écoule le long de la surface de percussion,
**caractérisé en ce que**
l'organe de division en portions présente une tuyère ou plusieurs tuyères raccordées en parallèle et que la pâte peut traverser pour être divisée en portions.

6. Dispositif selon la revendication 5, **caractérisé en ce que** la tuyère ou les différentes tuyères sont des tuyères à plusieurs matières.

7. Dispositif selon l'une des revendications 5 ou 6, **caractérisé en ce que** l'organe de division en portions présente un organe vibrant qui fait vibrer l'organe de division en portions.

8. Dispositif d'affinage de pâtes fluides, le dispositif prêsentant :
- un organe d'accélération (2) qui présente au moins sur une partie de sa surface une surface d'accélération (2a) dans une partie (4) de l'espace apte à être remplie par un gaz, l'organe d'accélération (2) pouvant être déplacé de telle sorte que pendant au moins une partie de son déplacement, la surface d'accélération (2a) exécute un déplacement accéléré à une vitesse dont la valeur et/ou la direction sont variables,
- un moyen (6) qui amène la pâte à affiner sur la surface d'accélération (2a) de l'organe d'accélération (2) mobile,
- une surface de percussion (8) qui délimite la partie (4) de l'espace et qui est percutée par la pâte accélérée à travers la partie (4) de l'espace de telle sorte que la pâte puisse s'écouler le long de la surface de percussion (8) au moins sous l'action de la gravité et
- un moyen (10) qui rassemble en un point de collecte (12) la pâte affinée qui s'est écoulée le long de la surface de percussion (8),
**caractérisé en ce que**
au moins un élément structurel (21), notamment une roue à aube, est disposé dans la partie (4) de l'espace pour déplacer le gaz.

9. Dispositif selon la revendication 8, **caractérisé en ce que** l'organe d'accélération est monté à rotation autour d'un axe vertical, l'organe d'accélération étant une formation en disque ou en plateau et/ou la surface d'accélération étant située en particulier sur le côté supérieur et/ou sur le côté inférieur de l'organe d'accélération.

10. Dispositif selon l'une des revendications 8 ou 9, **caractérisé en ce que** le moyen d'amenée de pâte est un moyen d'amenée de pâte dont l'embouchure est située à proximité de la surface d'accélération et/ou orientée vers la surface d'accélération, le conduit d'amenée de pâte étant en particulier configuré comme arbre creux relié à rotation solidaire à l'organe d'accélération.

11. Dispositif selon les revendications 8 ou 10, **caractérisé en ce que** l'organe d'accélération est un élément basculant monté élastiquement.

12. Dispositif selon l'une des revendications 8 à 11, **caractérisé en ce qu'**un élément cisaillant est disposé dans un conduit d'amenée de pâte, dans un conduit de sortie de pâte et/ou dans la partie (4) de l'espace, l'élément cisaillant étant constitué en particulier d'au moins un rotor et d'au moins un stator.

13. Dispositif selon l'une des revendications 8 à 12, **caractérisé en ce qu'**un cylindre, en particulier un cylindre de forme conique, et/ou au moins un cylindre creux sont disposés dans la partie de l'espace, le cylindre formant au moins dans la partie de l'espace un interstice entre sa surface extérieure et la surface de percussion.
